# EUROPÄISCHE PATENTANMELDUNG

(11) **EP 2 172 875 A1**
(43) Veröffentlichungstag der Anmeldung: **07.04.2010**
(21) Anmeldenummer: 09167631.2
(22) Anmeldetag: 11.08.2009
(51) Int. Cl.: G06K 9/62

(54) **Verfahren zur Auswahl von Merkmalen von Bildern einer Bilddatenbank**

(30) Priorität: 26.08.2008 DE 102008039753
(71) Anmelder: Vodafone Holding GmbH, 40213 Düsseldorf (DE)
(72) Erfinder: Hertle, Jochen, 85521 Ottobrunn (DE); Bogdan, Pelc, 10707 Berlin (DE)
(74) Vertreter: Müller & Schubert

(57) **Zusammenfassung**

Die vorliegende Erfindung betrifft unter anderem ein Verfahren zum Bearbeiten einer für den Einsatz mit einem Analyseverfahren zum automatischen Analysieren von digitalen Bildern vorgesehenen Datenbank, in welcher Referenzbilder und für jedes Referenzbild die charakteristischen Merkmale (FeaturePoints) abgespeichert sind, wobei während des Analyseverfahrens die charakteristischen Merkmale von zu analysierenden digitalen Bildern bestimmt und mit den charakteristischen Merkmalen der Referenzbilder verglichen werden. Um den benötigten Speicherplatz pro Referenzbild sowie die benötigte Vergleichszeit zum Vergleichen der charakteristischen Merkmale reduzieren zu können, ist erfindungsgemäß vorgesehen, dass die Datenbank automatisch während des Ablaufs des Analyseverfahrens bearbeitet wird, derart, dass bei Übereinstimmung wenigstens eines charakteristischen Merkmals eines zu analysierenden Bildes und eines Referenzbildes alle charakteristischen Merkmale des Referenzbildes einem Gewichtungsschritt unterzogen werden, und dass in Abhängigkeit von ihrer Gewichtung charakteristische Merkmale des Referenzbildes aus der Datenbank gelöscht werden. Weiterhin wird ein entsprechend verbessertes Verfahren zum Analysieren eines digitalen Bildes beschrieben.

## Beschreibung

Die vorliegende Erfindung betrifft zunächst ein Verfahren zum Bearbeiten einer für den Einsatz mit einem Analyseverfahren zum automatischen Analysieren von digitalen Bildern vorgesehenen Datenbank gemäß dem Oberbegriff von Patentanspruch 1. Weiterhin betrifft die Erfindung auch ein Verfahren zum Analysieren eines digitalen Bildes gemäß dem Oberbegriff von Patentanspruch 12.

Auf dem Gebiet der automatischen Analyse digitaler Bilder ist mittlerweile eine große Bandbreite unterschiedlicher Verfahren und Möglichkeiten bekannt geworden. Mit der zunehmenden Verbreitung der digitalen Fotografie beispielsweise ergeben sich immer neue Möglichkeiten, digitale Bilder in Kommunikationsnetzen zu übertragen und aufgrund der analysierten Inhalte der Bilder immer neue Anwendungen zu erzeugen.

Ein grundlegendes Merkmal hierbei ist, dass die Inhalte der digitalen Bilder analysiert werden können. Dies geschieht in der Regel mittels geeigneter Bildanalyseverfahren, die auf entsprechenden Rechnereinheiten implementiert sind und die die Inhalte der digitalen Bilder, vorzugsweise automatisch, analysieren.

Ein Anwendungsbeispiel für den Einsatz derartiger Bildanalyseverfahren ist etwa die bildbasierte Suche oder Anfrage. Eine solche Lösung ist beispielsweise in der DE 102 45 900 A1 beschrieben. Bei dieser bekannten Lösung wird mittels eines elektronischen Geräts mit Kamerafunktion ein Bild aufgenommen, das anschließend zu einer Rechnereinheit übertragen wird. Dort wird das Bild mittels eines Bilderkennungsverfahrens analysiert und in symbolische Informationen umgesetzt. Aufgrund dieser Symbole können dann geeignete Informationen bereitgestellt werden.

Es sind aber auch Lösungen bekannt, bei denen Bilder als Suchanfrage in das System eingegeben werden und bei denen dann eine Datenbank mit vielen Referenzbildern nach einem ähnlichen oder gleichen Bild durchsucht wird. Die Treffer werden als Liste mit den passenden Referenzbildern ausgegeben. Der Nutzer sendet in einem solchen Fall ein Bild als Suchanfrage an eine Rechnereinheit. Das System zur bildbasierten Suche vergleicht nun das eingesendete Bild mit Referenzbildern in einer Datenbank. Die passenden Referenzbilder werden zu einer Trefferliste zusammengefasst.

Eine auf diesem technologischen Gebiet bekannte Lösung ist beispielsweise in der US 5,123,057 B beschrieben. Die bekannte Lösung geht dabei von einer Situation aus, bei der eine Bildanalyse aufgrund hierarchisch angeordneter Referenzbilder, die inhaltlich bestimmt sind, und die in einer Referenzbilddatenbank abgespeichert sind, erfolgt.

Zur Analyse digitaler Bilder nutzen die Bildanalyseverfahren in der Regel geeignete Bildanalysealgorithmen.

Gemäß einer beispielhaften Analysemethode, auf die im weiteren Verlauf immer wieder Bezug genommen wird, um den grundsätzlichen Ablauf des Verfahrens zu verdeutlichen, verfügt jedes Referenzbild über eine bestimmte Anzahl charakteristischer Merkmale, anhand derer es der Suchalgorithmus erkennt. Diese Merkmale werden "FeaturePoints" genannt. Ein Referenzbild wird als Treffer ausgegeben, wenn eine bestimmte Mindestanzahl von FeaturePoints mit dem Suchbild übereinstimmt. Wird ein Suchbild unter denselben Bedingungen aufgenommen wie ein Referenzbild, so wird die Anzahl der übereinstimmenden FeaturePoints ungefähr gleich der gesamten Anzahl der FeaturePoints des Referenzbildes sein. Wird das Suchbild jedoch so aufgenommen, dass das Motiv des Referenzbildes nur zum Teil auf dem Suchbild zu sehen ist, so wird die Anzahl der übereinstimmenden FeaturePoints in der Regel kleiner sein.

Um die Referenzbilder für eine spätere Suche verwenden zu können, werden diese zunächst in der Datenbank abgespeichert. Dabei weist das Referenzbild zunächst die eigentliche bildliche Darstellung auf. Zusätzlich sind in der Datenbank die charakteristischen Merkmale (FeaturePoints) der Referenzbilder, die in einem Analyseverfahren zunächst bestimmt, beispielsweise extrahiert, worden sind, abgespeichert. Hierzu wird, insbesondere bei einer großen Anzahl von Referenzbildern, insgesamt eine große Speicherplatzmenge benötigt, da pro Referenzbild in der Regel zwischen 100 und 50.000 charakteristische Merkmale (FeaturePoints) vorhanden sein können.

Wenn eine bildbasierte Suche durchgeführt wird, wird das die Suche auslösende Bild an eine Rechnereinheit übertragen und dort analysiert. Dabei werden die charakteristischen Merkmale (FeaturePoints) des Bildes bestimmt. Die charakteristischen Merkmale werden anschließend mit den charakteristischen Merkmalen der Referenzbilder in der Datenbank verglichen. Bei Übereinstimmungen werden die hinter den übereinstimmenden charakteristischen Merkmalen liegenden Referenzbilder ausgewählt und zu einer Trefferliste zusammengestellt. Bei einer großen Anzahl von Referenzbildern und einer damit zusammenhängenden sehr großen Anzahl von charakteristischen Merkmalen, die jeweils für sich bereits Speicherplatz benötigen, muss eine große Menge charakteristischer Merkmale verglichen werden, was eine gewisse Zeit beansprucht.

Ausgehend vom genannten Stand der Technik liegt der vorliegenden Erfindung die Aufgabe zugrunde, ein Verfahren zum Bearbeiten einer Datenbank sowie ein Verfahren zum Analysieren eines digitalen Bildes der eingangs genannten Art derart weiterzubilden, dass die zuvor beschriebenen Nachteile vermieden werden können. Insbesondere soll ein Verfahren bereitgestellt werden, mittels dessen der benötigte Speicherplatz pro Referenzbild reduziert werden kann und mittels dessen die benötigte Vergleichszeit zum Vergleichen der charakteristischen Merkmale (FeaturePoints) reduziert werden kann.

Diese Aufgabe wird erfindungsgemäß gelöst durch das Verfahren zum Bearbeiten einer Datenbank mit den Merkmalen gemäß dem unabhängigen Patentanspruch 1 sowie das Verfahren zum Analysieren eines digitalen Bildes mit den Merkmalen gemäß dem unabhängigen Patentanspruch 12. Weitere Merkmale und Details der Erfindung ergeben sich aus den Unteransprüchen sowie der Beschreibung. Dabei gelten Merkmale und Details, die im Zusammenhang mit dem erfindungsgemäßen Bearbeitungsverfahren beschrieben sind, selbstverständlich auch im Zusammenhang mit dem erfindungsgemäßen Bildanalyseverfahren, und umgekehrt, so dass bezüglich der Offenbarung zu den einzelnen Erfindungsaspekten jeweils wechselseitig Bezug genommen wird.

Durch das erfindungsgemäße Verfahren kann zunächst der Platzbedarf eines Referenzbildes reduziert werden, da nicht benötigte, das heißt irrelevante charakteristische Merkmale eines Referenzbildes gelöscht werden. Weiterhin können so genannte "False Positives" reduziert werden. Wie dies im Einzelnen geschehen kann, wird nachfolgend in größerem Detail erläutert.

Gemäß dem ersten Aspekt der Erfindung wird bereitgestellt ein Verfahren zum Bearbeiten einer für den Einsatz mit einem Analyseverfahren zum automatischen Analysieren von digitalen Bildern vorgesehenen Datenbank, in welcher Referenzbilder und für jedes Referenzbild die charakteristischen Merkmale (FeaturePoints) abgespeichert sind, wobei während des Analyseverfahrens die charakteristischen Merkmale von zu analysierenden digitalen Bildern bestimmt und mit den charakteristischen Merkmalen der Referenzbilder verglichen werden. Das Verfahren ist erfindungsgemäß **dadurch gekennzeichnet, dass** die Datenbank automatisch während des Ablaufs des Analyseverfahrens bearbeitet wird, derart, dass bei Übereinstimmung wenigstens eines charakteristischen Merkmals eines zu analysierenden Bildes und eines Referenzbildes alle charakteristischen Merkmale des Referenzbildes einem Gewichtungsschritt unterzogen werden, und dass in Abhängigkeit von ihrer Gewichtung charakteristische Merkmale des Referenzbildes dann aus der Datenbank gelöscht werden, wenn diese einen bestimmten Gewichtungswert aufweisen oder wenn diese einen bestimmten Gewichtungswert aufweisen, der in einem bestimmten Gewichtungswertebereich liegt.

Gemäß dem ersten Aspekt der Erfindung wird ein Verfahren bereitgestellt, das zum Bearbeiten einer für den Einsatz mit einem Analyseverfahren zum automatischen Analysieren von digitalen Bildern vorgesehenen Datenbank ausgebildet ist.

In der Datenbank sind Referenzbilder abgespeichert. Jedes Referenzbild besteht zunächst aus der eigentlichen Darstellung des Bildes. Weiterhin ist eine Anzahl charakteristischer Merkmale (FeaturePoints) des Referenzbildes vorgesehen. Die charakteristischen Merkmale sind der Referenzbilddarstellung zugeordnet und ebenfalls in der Datenbank abgespeichert, beispielsweise in Form einer Liste.

Während des Analysevorgangs eines digitalen Bildes werden zunächst die charakteristischen Merkmale (FeaturePoints) des zu analysierenden digitalen Bildes bestimmt. Die ermittelten charakteristischen Merkmale werden dann mit den charakteristischen Merkmalen der Referenzbilder verglichen.

Beispielsweise kann vorgesehen sein, dass mittels einer digitalen Kamera ein digitales Bild erstellt wird, das anschließend auf eine Rechnereinrichtung, auf der das Analyseverfahren abläuft, übertragen wird. Mittels des Analyseverfahrens, insbesondere mittels eines geeigneten Bildanalysealgorithmus, wird das Bild analysiert, indem die charakteristischen Merkmale des digitalen Bildes bestimmt, beispielsweise extrahiert, werden.

Wenn das Verfahren initial gestartet wird, werden die digitalen Bilder mit den ermittelten charakteristischen Merkmalen in der Datenbank gespeichert. Sie stellen dann die Ausgangsmenge an Referenzbildern dar.

Erfindungsgemäß ist nun vorgesehen, dass die Datenbank während des Ablaufs des Analyseverfahrens automatisch bearbeitet wird. Im bestimmungsgemäßen Betrieb des Analyseverfahrens werden digitale Bilder analysiert und gegen die in der Datenbank befindlichen Referenzbilder verglichen. Dies geschieht in einer Weise, dass die ermittelten charakteristischen Merkmale des zu analysierenden digitalen Bildes gegen die in der Datenbank befindlichen charakteristischen Merkmale der Referenzbilder verglichen werden. Werden dabei übereinstimmende charakteristische Merkmale gefunden, handelt es sich um in Bezug auf den Vergleich relevante charakteristische Merkmale.

Erfindungsgemäß ist vorgesehen, dass die Bearbeitung der Datenbank in ganz besonderer Weise erfolgt. Kommt es zu einer Übereinstimmung wenigstens eines charakteristischen Merkmals eines zu analysierenden Bildes mit einem charakteristischen Merkmal eines Referenzbildes, werden alle charakteristischen Merkmale des Referenzbildes einem Gewichtungsschritt unterzogen. Dabei kann die Situation auftreten, dass eines oder mehrere charakteristische Merkmale des Referenzbildes mit einem oder mehreren charakteristischen Merkmalen des zu analysierenden Bildes übereinstimmen (Positives Matching). Ebenso kann die Situation auftreten, dass eines oder mehrere charakteristische Merkmale eines Referenzbildes keine Übereinstimmung mit einem oder mehreren charakteristischen Merkmalen des zu analysierenden Bildes aufweisen (Negatives Matching).

Erfindungsgemäß ist nun vorgesehen, dass alle charakteristischen Merkmale des Referenzbildes, sowohl solche mit positivem Matching als auch solche mit negativem Matching einem Gewichtungsschritt unterzogen werden. Wie dies im Einzelnen geschehen kann, wird im weiteren Verlauf anhand einiger vorteilhafter, jedoch nicht ausschließlicher Beispiele näher erläutert.

In Abhängigkeit ihrer Gewichtung werden dann gegebenenfalls charakteristische Merkmale des Referenzbildes aus der Datenbank gelöscht. Dabei erfolgt eine Löschung charakteristischer Merkmale nicht immer zwangsläufig, sondern in bestimmten Fällen. Bevorzugt ist es, wenn solche charakteristischen Merkmale eines Referenzbildes gelöscht werden, die für die Darstellung des Referenzbildes an sich nicht relevant sind. Solche charakteristischen Merkmale eines Referenzbildes werden sich in der Regel dadurch auszeichnen, dass diese nur wenige bis gar keine positiven Matchings bei den Vergleichen haben.

Ein Vorteil der Erfindung ist nun, dass insbesondere solche charakteristischen Merkmale eines Referenzbildes, die für ein entsprechendes Referenzbild nicht relevant sind, gelöscht zu können. Dadurch kann der benötigte Speicherplatz pro Referenzbild reduziert werden. Vorteilhaft werden charakteristische Merkmale des Referenzbildes in Abhängigkeit von ihrer Gewichtung aus der Datenbank gelöscht, und zwar dann, wenn diese einen bestimmten Gewichtungswert aufweisen. Anders ausgedrückt kann eine Löschung bestimmter charakteristischer Merkmale beispielsweise dann erfolgen, wenn diese einen bestimmen Gewichtungswert überschreiten oder unterschreiten. Beispielsweise kann dies der Fall sein, wenn es sich bei dem Gewichtungswert um einen Schwellwert handelt, etwa einen oberen oder einen unteren Schwellwert, der dann überschritten beziehungsweise unterschritten wird. Denkbar ist auch, dass eine Löschung charakteristischer Merkmale dann vorgenommen wird, wenn ein bestimmter Gewichtungswert erreicht wird. Alternativ kann auch vorgesehen sein, dass eine Löschung charakteristischer Merkmale dann erfolgt, wenn charakteristische Merkmale einen Gewichtungswert aufweisen, der innerhalb eines bestimmten Gewichtungswertebereichs liegt.

Die vorliegende Erfindung ist nicht auf bestimmte Gewichtungswerte oder Gewichtungswertebereiche beschränkt. Allerdings soll es sich hierbei um bestimmte, das heißt vorgegebene Werte und Bereiche handeln, die jedoch nach Art und Weise des Einsatzes des Verfahrens unterschiedlich gewählt sein können. Auch dies wird im weiteren Verlauf anhand vorteilhafter, jedoch nicht ausschließlicher Beispiele näher erläutert.

Vorteilhaft kann vorgesehen sein, dass mittels des Analyseverfahrens analysierte Bilder und deren charakteristische Merkmale als Referenzbilder in der Datenbank abgespeichert werden. Auf diese Weise kann die Datenbank fortlaufend ergänzt und um zusätzliche Referenzbilder erweitert werden.

Vorzugsweise kann die Gewichtung der charakteristischen Merkmale eines Referenzbildes zu definierten Zeitpunkten und/oder in definierten Zeitintervallen automatisch überprüft werden, wobei eine Löschung charakteristischer Merkmale des Referenzbildes erst im Anschluss an eine solche Überprüfung erfolgt. Das bedeutet, dass die Datenbank regelmäßig dahingehend überprüft wird, ob die Gewichtung einzelner charakteristischer Merkmale einzelner Referenzbilder ein Löschen der charakteristischen Merkmale zulässt. Ist dies der Fall, werden im Zeitpunkt der Überprüfung all diejenigen charakteristischen Merkmale von Referenzbildern gelöscht, deren Gewichtung eine Löschung ermöglicht.

Die Gewichtung kann auf unterschiedliche Weise erfolgen. Vorteilhaft kann vorgesehen sein, dass jedem charakteristischen Merkmal eines Referenzbildes eine Zählereinrichtung zugeordnet ist und dass während des Gewichtungsschritts die Zählereinrichtungen der charakteristischen Merkmale betätigt werden. Jedes charakteristische Merkmal in einem Referenzbild verfügt somit über eine Zählereinrichtung.

Vorteilhaft kann dann vorgesehen sein, dass bei Übereinstimmung eines charakteristischen Merkmals eines Referenzbildes mit einem charakteristischen Merkmal eines zu analysierenden Bildes der Zählwert bei der dem charakteristischen Merkmal des Referenzbildes zugeordneten Zähleinrichtung erhöht wird. Beispielsweise kann vorgesehen sein, dass der Zählwert jeweils in Einerschritten erhöht wird. In weiterer Ausgestaltung kann vorgesehen sein, dass bei nicht vorhandener Übereinstimmung eines charakteristischen Merkmals eines Referenzbildes mit einem charakteristischen Merkmal eines zu analysierenden Bildes der Zählwert bei der dem charakteristischen Merkmal des Referenzbildes zugeordneten Zähleinrichtung gleich bleibt oder reduziert wird.

Dies soll anhand eines Beispiels verdeutlicht werden. Ein zu analysierendes Bild wird erstellt und mittels eines Bildanalyseverfahrens, insbesondere unter Zuhilfenahme eines Bildanalysealgorithmus, analysiert. Dabei werden die charakteristischen Merkmale (FeaturePoints) des zu analysierenden Bildes bestimmt, beispielsweise extrahiert. Nun wird das zu analysierende Bild mit den Referenzbildern in der Datenbank verglichen, indem die charakteristischen Merkmale des zu analysierenden Bildes und die charakteristischen Merkmale des Referenzbildes miteinander verglichen werden. Dabei werden übereinstimmende charakteristische Merkmale gefunden. Jedem charakteristischen Merkmal eines Referenzbildes ist eine Zählereinrichtung zugeordnet. Jedes Mal dann, wenn eine Überprüfung erfolgreich war und es zu einer Übereinstimmung zwischen einem charakteristischen Merkmal des zu analysierenden digitalen Bildes und eines charakteristischen Merkmals eines Referenzbildes kommt (positives Matching), wird der Zählwert des entsprechenden charakteristischen Merkmals des Referenzbildes um Eins erhöht.

Ebenso tritt bei den Vergleichen die Situation auf, dass zwischen einzelnen charakteristischen Merkmalen des zu analysierenden digitalen Bildes und charakteristischen Merkmalen des Referenzbildes keine Übereinstimmung auftritt (negatives Matching). Auch ein solcher Fall hat Einfluss auf die Zähleinrichtung des entsprechenden charakteristischen Merkmals des Referenzbildes. Beispielsweise kann vorgesehen sein, dass der Zählwert des entsprechenden charakteristischen Merkmals sich nicht verändert und somit gleich bleibt. Alternativ kann aber auch vorgesehen sein, dass sich der Zählwert in einer solchen Situation reduziert, was beispielsweise wiederum in Einerschritten geschehen kann.

Vorteilhaft ist vorgesehen, dass die Datenbank in regelmäßigen Zeitabständen dahingehend geprüft wird, wie sich die einzelnen Zählerstände der charakteristischen Merkmale der Referenzbilder verändert haben.

Die Zählerstände der einzelnen charakteristischen Merkmale der Referenzbilder stellen nun die Gewichtung dar, die ausschlaggebend dafür ist, ob ein charakteristisches Merkmal eines Referenzbildes aus der Datenbank gelöscht wird. Beispielsweise können charakteristische Merkmale des Referenzbildes in Abhängigkeit von ihrer Gewichtung aus der Datenbank gelöscht werden, sobald der Zählwert wenigstens eines charakteristischen Merkmals des Referenzbildes einen ersten, oberen Schwellenwert erreicht oder überschritten hat.

Grundsätzlich ist es für die Durchführbarkeit des Verfahrens ausreichend, wenn nur ein einziges charakteristisches Merkmal den Schwellenwert erreicht oder überschreitet. Vorteilhaft kann jedoch vorgesehen sein, dass charakteristische Merkmale des Referenzbildes in Abhängigkeit von ihrer Gewichtung dann aus der Datenbank gelöscht werden, sobald die Zählwerte einer vorgegebenen Anzahl charakteristischer Merkmale des Referenzbildes einen ersten, oberen Schwellenwert erreicht oder überschritten haben.

Zurückkommend auf das oben genannte Beispiel könnte dies folgendes bedeuten. Wenn ein digitales Bild analysiert wird, werden die charakteristischen Merkmale des digitalen Bildes mit den charakteristischen Merkmalen der Referenzbilder verglichen. Dabei kommt es zu den oben beschriebenen positiven und negativen Matchings. Jedes Mal, wenn ein Matching erfolgreich war, wird der Zählwert des entsprechenden charakteristischen Merkmals des Referenzbildes entsprechend erhöht. Eine Löschung charakteristischer Merkmal eines Referenzbildes findet nur dann statt, wenn wenigstens ein charakteristisches Merkmal des Referenzbildes eine bestimmte Schwelle erreicht oder überschreitet. Beispielsweise könnte eine solche Schwelle bei "10" liegen. Das bedeutet, dass im bestimmungsgemäßen Betrieb des Analyseverfahrens zunächst zehn Mal ein positives Matching mit dem entsprechenden charakteristischen Merkmal des Referenzbildes erfolgt sein muss, bevor überhaupt ein charakteristisches Merkmal des Referenzbildes aus der Datenbank gelöscht wird. Weiterhin ist vorteilhaft vorgesehen, dass eine Löschung charakteristischer Merkmale auch nur dann erfolgt, wenn eine bestimmte Anzahl von charakteristischen Merkmalen, beispielsweise "10", diese Schwelle überschritten haben.

Vorteilhaft werden auch nur solche charakteristischen Merkmale eines Referenzbildes gelöscht, die eine ganz bestimmte, vorgegebene Gewichtung haben. Beispielsweise kann vorgesehen sein, dass solche charakteristischen Merkmale des Referenzbildes in Abhängigkeit von ihrer Gewichtung aus der Datenbank gelöscht werden, deren Zählwerte unter einem zweiten, unteren Schwellenwert liegen. Beispielsweise könnte dieser Schwellwert bei "0" liegen.

Zurückkommend auf das vorgenannte Beispiel könnte dies folgendes bedeuten. Im bestimmungsgemäßen Betrieb des Analyseverfahrens wird eine Reihe von digitalen Bildern analysiert. Beispielsweise kann vorgesehen sein, dass das Analyseverfahren zur bildbasierten Suche ausgelegt ist. Das bedeutet, dass ein digitales Bild in Form einer Suchanfrage an eine Rechnereinrichtung übertragen und dort in der oben genannten Weise analysiert wird. Nach der Ermittlung der charakteristischen Merkmale werden diese mit den charakteristischen Merkmalen der in der Datenbank befindlichen Referenzbilder verglichen. Bei einigen der charakteristischen Merkmale treten immer wieder Übereinstimmungen auf. Das bedeutet, dass diese charakteristischen Merkmale im Referenzbild von Relevanz sind. Hinsichtlich anderer charakteristischer Merkmale im Referenzbild treten hingegen seltener oder niemals Übereinstimmungen auf. Dementsprechend entwickeln sich die Zählwerte der den charakteristischen Merkmalen zugeordneten Zählereinrichtungen. Diese charakteristischen Merkmale sind dann als nicht relevant für das entsprechende Referenzbild anzusehen. Sofern nun eine bestimmte Anzahl relevanter charakteristischer Merkmale einen bestimmten oberen Schwellwert erreicht oder überschritten hat, werden diejenigen charakteristischen Merkmale, die nicht relevant sind, da sie unterhalb eines bestimmten unteren Schwellwerts liegen, aus der Datenbank gelöscht.

Dadurch kann zum einen der erforderliche Speicherplatz reduziert werden. Weiterhin wird die Wahrscheinlichkeit für "False Positives" reduziert, wodurch die Qualität der Suchergebnisse erhöht wird. Schließlich kann auch die für die Suche benötigte Zeit reduziert werden, da die Anzahl der zu vergleichenden charakteristischen Merkmale innerhalb der Datenbank reduziert wird.

Vorteilhaft kann auch vorgesehen sein, dass das gesamte Referenzbild aus der Datenbank gelöscht wird, wenn in Abhängigkeit von ihrer Gewichtung eine vorgegebene Anzahl charakteristischer Merkmale des Referenzbildes aus der Datenbank gelöscht wird.

Bevorzugt kann die Bestimmung der charakteristischen Merkmale der Referenzbilder und/oder der zu analysierenden digitalen Bilder mittels eines SIFT-Bildanalysealgorithmus erfolgen. Der Sift-Algorithmus (Scale Invariant Feature Transform) ist ein Algorithmus zur Extraktion lokaler Bildmerkmale aus Abbildungen, der vorteilhaft bei der Bilderkennung zum Einsatz kommt. Er wurde von David G. Lowe an der University of British Columbia im Jahre 1999 veröffentlicht.

Durch das erfindungsgemäße Verfahren kann eine Datenbank mit Referenzbildern auf besonders einfache und zuverlässige Weise gepflegt und optimiert werden. Dabei findet die Selbstoptimierung und Pflege der Datenbank während des bestimmungsgemäßen Betriebs des Analyseverfahrens statt,

Besonders vorteilhaft kann ein solches Verfahren im Kontext der bildbasierten Suche zum Einsatz kommen.

Gemäß einem zweiten Aspekt der Erfindung wird deshalb ein Verfahren zum Analysieren eines digitalen Bildes bereitgestellt, wobei das zu analysierende digitale Bild in einer einer Rechnereinheit zugeordneten Analyseeinrichtung automatisch analysiert wird, wobei das digitale Bild gegen Referenzbilder, die zusammen mit charakteristischen Merkmalen (FeaturePoints) in einer der Rechnereinheit zugeordneten Datenbank abgespeichert sind, verglichen wird, wobei während des Analyseverfahrens die charakteristischen Merkmale von zu analysierenden digitalen Bildern bestimmt und mit den charakteristischen Merkmalen der Referenzbilder verglichen werden und wobei solche Referenzbilder, die in einem Bezug zu dem zu analysierenden digitalen Bild stehen, von der Analyseeinrichtung in einer Trefferliste zusammengefasst werden. Dieses Verfahren ist erfindungsgemäß **dadurch gekennzeichnet, dass** die Datenbank automatisch während des Ablaufs des Analyseverfahrens bearbeitet wird, derart, dass bei Übereinstimmung wenigstens eines charakteristischen Merkmals eines zu analysierenden Bildes und eines Referenzbildes alle charakteristischen Merkmale des Referenzbildes einem Gewichtungsschritt unterzogen werden, und dass in Abhängigkeit von ihrer Gewichtung charakteristische Merkmale des Referenzbildes dann aus der Datenbank gelöscht werden, wenn diese einen bestimmten Gewichtungswert aufweisen, oder wenn diese einen bestimmten Gewichtungswert aufweisen, der in einem bestimmten Gewichtungswertebereich liegt.

Vorteilhaft kann die Bearbeitung der Datenbank mittels eines wie weiter oben beschriebenen erfindungsgemäßen Bearbeitungsverfahrens erfolgen.

Die beiden erfindungsgemäßen Verfahrensaspekte werden vorteilhaft in solchen Kontexten eingesetzt, in denen Nutzer Fotos von Objekten an eine Rechnereinheit oder einen Dienst schicken. Dort wird mittels einer Bildanalysetechnologie, beispielsweise basierend auf dem SIFT-Bildanalysealgorithmus, das Foto analysiert und mit Referenzbildern in einer Datenbank verglichen. Passende Bilder werden in der Datenbank gefunden und dem Nutzer anschließend zur Verfügung gestellt.

Ein grundlegendes Merkmal der vorliegenden Erfindung besteht nun darin, dass die von den Nutzern geschickten Bilder und die korrespondierenden resultierenden positiven Ergebnisse (positive Matching Results) genutzt werden können, um die Bildanalyse in besonderer Weise zu verbessern. Dies kann wie folgt geschehen: Jedes Referenzbild wird zunächst vorab analysiert, und es werden die charakteristischen Merkmale (FeaturePoints) extrahiert. Bei Einsatz des SIFT-Algorithmus handelt es sich bei den charakteristischen Merkmalen um die so genannten SIFT-Punkte. Die Anzahl charakteristischer Merkmale pro Bild liegt üblicherweise im Bereich zwischen 100 und 50.000. Wenn Bilder bestimmen Inhalts miteinander verglichen werden, besteht üblicherweise die Situation, dass einzelne charakteristische Merkmale der Bilder relevanter sind als andere. Um herauszufinden, welche charakteristischen Merkmale das sind, werden die einzelnen charakteristischen Merkmale der Referenzbilder während des bestimmungsgemäßen Betriebs des Analyseverfahrens in besonderer Weise gewichtet. Bei jeder eingehenden Suchanfrage werden die charakteristischen Merkmale der zu analysierenden Bilder bestimmt und mit den charakteristischen Merkmalen der Referenzbilder verglichen. Wenn der Vergleich positiv war und es zu einer Übereinstimmung (positives Matching) kommt, bekommen die übereinstimmenden charakteristischen Merkmale des Referenzbildes ein höheres Gewicht (beispielsweise einen höheren Zählwert). Wenn es zu keiner Übereinstimmung kommt (negatives Matching), wird das Gewicht des entsprechenden charakteristischen Merkmals des Referenzbildes entsprechend reduziert, oder aber es bleibt unverändert.

In weiterer Ausgestaltung kann schließlich auch vorgesehen sein, dass eine Messung eingeführt wird, die eine normalisierte Metrik des Raumes der charakteristischen Merkmale schafft. Beispielsweise kann die gewichtete Summe aller übereinstimmenden charakteristischen Merkmale durch die Anzahl aller übereinstimmenden charakteristischen Merkmale dividiert werden. Bei Verwendung dieser Messung kann eine Übereinstimmung (ein Match) mit einer Messung assoziiert werden, die ein vertrauenswürdiges Übereinstimmungslevel erzeugt. Die Messung kann sich kontinuierlich verbessern, da neue Suchanfragen zusätzliche Informationen bringen und das Gewicht einzelner relevanter charakteristischer Merkmale erhöht wird, während das Gewicht einzelner irrelevanter charakteristischer Merkmale reduziert wird.

## Patentansprüche

1. Verfahren zum Bearbeiten einer für den Einsatz mit einem Analyseverfahren zum automatischen Analysieren von digitalen Bildern vorgesehenen Datenbank, in welcher Referenzbilder und für jedes Referenzbild die charakteristischen Merkmale (FeaturePoints) abgespeichert sind, wobei während des Analyseverfahrens die charakteristischen Merkmale von zu analysierenden digitalen Bildern bestimmt und mit den charakteristischen Merkmalen der Referenzbilder verglichen werden, **dadurch gekennzeichnet, dass** die Datenbank automatisch während des Ablaufs des Analyseverfahrens bearbeitet wird, derart, dass bei Übereinstimmung wenigstens eines charakteristischen Merkmals eines zu analysierenden Bildes und eines Referenzbildes alle charakteristischen Merkmale des Referenzbildes einem Gewichtungsschritt unterzogen werden, und dass in Abhängigkeit von ihrer Gewichtung charakteristische Merkmale des Referenzbildes dann aus der Datenbank gelöscht werden, wenn diese einen bestimmten Gewichtungswert aufweisen, oder wenn diese einen bestimmten Gewichtungswert aufweisen, der in einem bestimmten Gewichtungswertebereich liegt.

2. Verfahren nach Anspruch 1, **dadurch gekennzeichnet, dass** mittels des Analyseverfahrens analysierte Bilder und deren charakteristische Merkmale als Referenzbilder in der Datenbank abgespeichert werden.

3. Verfahren nach Anspruch 1 oder 2, **dadurch gekennzeichnet, dass** die Gewichtung der charakteristischen Merkmale eines Referenzbildes zu definierten Zeitpunkten und/oder in definierten Zeitintervallen automatisch überprüft wird und dass eine Löschung charakteristischer Merkmale des Referenzbildes im Anschluss an eine solche Überprüfung erfolgt.

4. Verfahren nach einem der Ansprüche 1 bis 3, **dadurch gekennzeichnet, dass** jedem charakteristischen Merkmal eines Referenzbildes eine Zählereinrichtung zugeordnet ist und dass während des Gewichtungsschritts die Zählereinrichtungen der charakteristischen Merkmale betätigt werden.

5. Verfahren nach Anspruch 4, **dadurch gekennzeichnet, dass** bei Übereinstimmung eines charakteristischen Merkmals eines Referenzbildes mit einem charakteristischen Merkmal eines zu analysierenden Bildes der Zählwert bei der dem charakteristischen Merkmal des Referenzbildes zugeordneten Zähleinrichtung erhöht wird.

6. Verfahren nach Anspruch 4 oder 5, **dadurch gekennzeichnet, dass** bei nicht vorhandener Übereinstimmung eines charakteristischen Merkmals eines Referenzbildes mit einem charakteristischen Merkmal eines zu analysierenden Bildes der Zählwert bei der dem charakteristischen Merkmal des Referenzbildes zugeordneten Zähleinrichtung gleich bleibt oder reduziert wird.

7. Verfahren nach Anspruch 5 oder 6, **dadurch gekennzeichnet, dass** charakteristische Merkmale des Referenzbildes in Abhängigkeit von ihrer Gewichtung aus der Datenbank gelöscht werden, sobald der Zählwert wenigstens eines charakteristischen Merkmals des Referenzbildes einen ersten, oberen Schwellenwert erreicht oder überschritten hat.

8. Verfahren nach Anspruch 7, **dadurch gekennzeichnet, dass** charakteristische Merkmale des Referenzbildes in Abhängigkeit von ihrer Gewichtung aus der Datenbank gelöscht werden, sobald die Zählwerte einer vorgegebenen Anzahl charakteristischer Merkmale des Referenzbildes einen ersten, oberen Schwellenwert erreicht oder überschritten haben.

9. Verfahren nach einem der Ansprüche 7 oder 8, **dadurch gekennzeichnet, dass** solche charakteristischen Merkmale des Referenzbildes in Abhängigkeit von ihrer Gewichtung aus der Datenbank gelöscht werden, deren Zählwerte unter einem zweiten, unteren Schwellenwert liegen.

10. Verfahren nach einem der Ansprüche 1 bis 9, **dadurch gekennzeichnet, dass** das gesamte Referenzbild aus der Datenbank gelöscht wird, wenn in Abhängigkeit von ihrer Gewichtung eine vorgegebene Anzahl charakteristischer Merkmale des Referenzbildes aus der Datenbank gelöscht wird.

11. Verfahren nach einem der Ansprüche 1 bis 10, **dadurch gekennzeichnet, dass** die Bestimmung der charakteristischen Merkmale der Referenzbilder und/oder der zu analysierenden digitalen Bilder mittels eines SIFT-Bildanalysealgorithmus erfolgt.

12. Verfahren zum Analysieren eines digitalen Bildes, wobei das zu analysierende digitale Bild in einer einer Rechnereinheit zugeordneten Analyseeinrichtung automatisch analysiert wird, wobei das digitale Bild gegen Referenzbilder, die zusammen mit charakteristischen Merkmalen (FeaturePoints) in einer der Rechnereinheit zugeordneten Datenbank abgespeichert sind, verglichen wird, wobei während des Analyseverfahrens die charakteristischen Merkmale von zu analysierenden digitalen Bildern bestimmt und mit den charakteristischen Merkmalen der Referenzbilder verglichen werden und wobei solche Referenzbilder, die in einem Bezug zu dem zu analysierenden digitalen Bild stehen, von der Analyseeinrichtung in einer Trefferliste zusammengefasst werden, **dadurch gekennzeichnet, dass** die Datenbank automatisch während des Ablaufs des Analyseverfahrens bearbeitet wird, derart, dass bei Übereinstimmung wenigstens eines charakteristischen Merkmals eines zu analysierenden Bildes und eines Referenzbildes alle charakteristischen Merkmale des Referenzbildes einem Gewichtungsschritt unterzogen werden, und dass in Abhängigkeit von ihrer Gewichtung charakteristische Merkmale des Referenzbildes dann aus der Datenbank gelöscht werden, wenn diese einen bestimmten Gewichtungswert aufweisen, oder wenn diese einen bestimmten Gewichtungswert aufweisen, der in einem bestimmten Gewichtungswertebereich liegt.

13. Verfahren nach Anspruch 12, **dadurch gekennzeichnet, dass** die Bearbeitung der Datenbank gemäß einem der Patentansprüche 2 bis11 erfolgt.
